Europäisches Patentamt

European Patent Office

Office européen des brevets

(19)

(11) Numéro de publication: **0 036 216**
**B1**

(12) **FASCICULE DE BREVET EUROPEEN**

(45) Date de publication du fascicule du brevet: **12.09.84**

(51) Int. Cl.³: **F 16 H 45/02**

(21) Numéro de dépôt: **81102024.7**

(22) Date de dépôt: **18.03.81**

(54) **Convertisseur de couple hydrodynamique muni de moyens de pontage.**

(30) Priorité: **19.03.80 FR 8006166**

(43) Date de publication de la demande:
**23.09.81 Bulletin 81/38**

(45) Mention de la délivrance du brevet:
**12.09.84 Bulletin 84/37**

(84) Etats contractants désignés:
**BE DE GB IT NL SE**

(56) Documents cités:
**FR-A-1 246 261**
**FR-A-2 323 066**
**US-A-3 228 503**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Parthuisot, Jean-Pierre**
**158-166 rue du Lt-Colonel de Montbrison**
**F-92500 Rueil-Malmaison (FR)**
Inventeur: **Chevalier, Claude**
**route de la Daubrie**
**F-78760 Jouare-Pontchartrain (FR)**
Inventeur: **Bouvet, Jean-Marie**
**133 rue de Silly**
**F-92100 Boulogne-Billancourt (FR)**

(74) Mandataire: **Casalonga, Axel et al**
**BUREAU D.A. CASALONGA OFFICE JOSSE & PETIT Baaderstrasse 12-14**
**D-8000 München 5 (DE)**

Courier Press, Leamington Spa, England.

## Description

La présente invention est relative à un convertisseur de couple hydrodynamique comportant des moyens de pontage permettant d'effectuer la couplage sans glissement entre l'arbre d'entrée et l'arbre de sortie du convertisseur.

Un tel convertisseur de couple hydrodynamique peut être utilisé avantageusement dans une transmission automatique de véhicule automobile à plusieurs rapports de transmission à passage sous couple. Dans une telle transmission, le convertisseur hydrocinétique de couple est placé entre le moteur d'entraînement du véhicule et la boîte de vitesses. Le convertisseur de couple multiplie le couple d'entrée fourni par le moteur d'entraînement par un certain coefficient pendant une phase transitoire dite phase de conversion de couple. A partir d'une certaine valeur de la vitesse de rotation de l'arbre de sortie du convertisseur, la phase de conversion de couple se trouve terminée et l'on atteint une phase de couplage pendant laquelle il subsiste cependant entre les éléments tournants d'entrée et de sortie du convertisseur un certain glissement qui diminue le rendement global du groupe moto-propulseur et augmente de ce fait sa consommation en carburant. On a donc songé, afin de réduire cette consommation dans le cas d'un véhicule équipé d'une telle transmission atuomatique à convertisseur de couple, à solidariser les organes d'entrée et de sortie dès la fin de la phase de conversion de façon à supprimer le glissement. Cette opération est dite "pontage" entre l'arbre de sortie et l'arbre d'entrée du convertisseur de couple.

Certains dispositifs connus de commande de pontage de convertisseur de couple comprennent des moyens d'alimentation hydrauliques extérieurs distincts du circuit d'alimentation ou de gavage de l'enceinte du convertisseur. Il en résulte une complexité notable de la commande de pontage et l'impossibilité de réaliser un dispositif compact.

On connaît (FR—A—2 323 066) un convertisseur de couple muni de moyens de pontage et comprenant un embrayage de pontage commandé par un piston mobile soumis à la pression régnant dans l'enceinte du convertisseur. Le piston présente un orifice de passage restreint faisant communiquer l'enceinte avec une chambre dont le piston constitue une paroi mobile. La commande de pontage se fait par une modification du sens de circulation du fluide d'alimentation provoquée par une vanne montée dans le circuit hydraulique d'alimentation du convertisseur.

L'invention a pour objet un convertisseur de couple de ce type dans lequel l'alimentation en fluide hydraulique du convertisseur se fait toujours dans le même sens à pression constante et permet la commande du pontage par l'action d'une pression intermédiaire engendrée de manière simple dans le convertisseur.

Par ailleurs, par opposition aux différents dispositifs de commande de pontage de type connu, l'invention a pour objet un convertisseur de couple dont la commande de pontage puisse être faite au moyen d'informations concernant le fonctionnement de la transmission et du véhicule équipé de ladite transmission après traitement par un dispositif électronique de façon à permettre un pontage sur chacun des rapports de transmission tout en évitant le pontage au moment du passage des différents rapports et en tenant compte du fonctionnement réel du convertisseur.

Tel qu'il est revendiqué, le convertisseur de couple hydrodynamique selon l'invention est muni de moyens de pontage permettant le couplage sans glissement entre l'arbre d'entrée et l'arbre de sortie du convertisseur et comprend un embrayage muni d'un piston de commande soumis à l'action de la pression régnant dans l'enceinte du convertisseur et présentant un orifice de passage calibré jouant le rôle d'une restriction faisant communiquer l'enciente avec une chambre de commande dont le piston de commande constitue une paroi mobile. Une vanne de commande qui est avantageusement une électrovanne est montée dans le circuit hydraulique d'alimentation du convertisseur entre l'enceinte du convertisseur et le retour au réservoir de fluide, c'est-à-dire en aval du convertisseur lui-même, de façon à provoquer une variation de la pression agissant sur l'une des faces du piston de commande, l'autre face restant soumise sensiblement à la pression constante du fluide d'alimentation.

L'alimentation en fluide hydraulique du convertisseur se fait toujours dans le même sens et à pression constante, la vanne de commande définissant une pression intermédiaire qui permet la commande de pontage.

Dans un premier mode de réalisation de l'invention, le fluide hydraulique à pression constante alimente directement l'enceinte du convertisseur. La vanne de commande comporte trois voies et deux positions et elle est montée de façon à fermer dans une première position le circuit de l'enciente du convertisseur et à fermer dans une deuxième position le circuit de la chambre de commande. Ladite restriction se trouve disposée dans le circuit hydraulique entre l'enceinte du convertisseur et la vanne de commande afin que dans la deuxième position précitée de la vanne de commande, la pression régnant dans l'enceinte du convertisseur et dans la chambre de commande soit sensiblement égale à la pression d'alimentation en fluide hydraulique du convertisseur. Un ressort de rappel disposé dans la chambre de commande exerce sur le piston de commande une poussée en direction de l'enceinte du convertisseur.

Dans ces conditions, lorsque la vanne de commande se trouve dans sa deuxième position fermant le circuit de la chambre de commande, les deux faces du piston de commande sont soumises sensiblement à la même pression hydraulique et c'est l'action de poussée du ressort de rappel du piston de commande qui entraîne un déplacement en translation de ce dernier dans le sens du dépontage l'ensemble fonctionnant alors en convertisseur de couple.

Dans un deuxième mode de réalisation de l'invention, le fluide hydraulique à pression constante alimente la chambre de commande. La vanne de commande est constituée par un simple clapet d'obturation de préférence à commande électrique. Une deuxième restriction est disposée dans un branchement secondaire de retour au réservoir de fluide. Dans ces conditions, la première restriction constituée par l'orifice calibré traversant le piston de commande et cette deuxième restriction permettent en combinaison avec le clapet d'obturation de définir une pression intermédiaire pour le fluide régnant dans l'enceinte du convertisseur. Le niveau de cette pression intermédiaire est déterminé par la position ouverte ou fermée du clapet d'obturation. Dans ce mode de réalisation le ressort de rappel est monté dans l'enceinte du convertisseur de façon à exercer une poussée sur le piston de commande en direction de la chambre de commande.

Dans tous les cas, le piston de commande est disposé à l'intérieur même de la cloche délimitant l'enceinte du convertisseur et comporte une portion de serrage coopérant avec l'embrayage. Un dispositif amortisseur des vibrations de torsion est de préférence disposé entre l'embrayage et l'arbre de sortie.

Par ailleurs, l'alimentation en fluide hydraulique à pression constante se fait de préférence par un arbre de transmission central creux et par l'intermédiaire d'une chambre de distribution placée à l'extrémité du moyeu du convertisseur. On obtient ainsi une structure particulièrement compacte tout en limitant notablement les pertes de charge en particulier dans le cas d'une configuration de transmission en boîte de pont.

L'action sur la vanne de commande permettant de placer comme il vient d'être dit le convertisseur soit en position de pontage, soit en position de conversion de couple est de préférence effectuée par des moyens électroniques recevant des signaux correspondant respectivement à la vitesse de rotation de l'arbre d'entrée et de l'arbre de sortie du convertisseur. Le changement de position de la vanne de commande se fait dès que le rapport de ces vitesses atteint une valeur prédéterminée correspondant au point de couplage théorique du convertisseur. Les moyens électroniques utilisés comprennent de préférence un circuit de temporisation recevant des signaux de passage des rapports de vitesse de la transmission, permettant d'interrompre le pontage à chaque passage de vitesse par action correspondante sur la vanne de commande définissant la position du piston de commande.

L'invention sera mieux comprise à l'étude de la description détaillée de deux modes de réalisation pris à titre d'exemples nullement limitatifs et illustrés par les dessins annexés, sur lesquels:

la fig. 1 est une vue en coupe longitudinale schématique d'un convertisseur de couple hydrodynamique selon l'invention; et

la fig. 2 est une vue en coupe longitudinale schématique d'une variante d'un convertisseur de couple hydrodynamique conforme à l'invention.

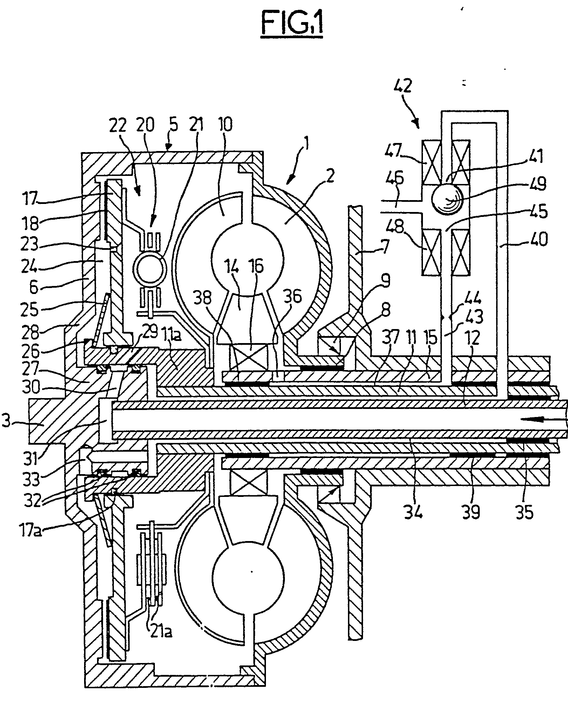

Tel qu'il est représenté sur la fig. 1, le convertisseur 1 comprend un élément d'entrée 2 également appelé pompe ou impulseur, relié mécaniquement à l'arbre d'entrée ou arbre moteur 3 solidaire d'un moteur d'entraînement non représenté sur la figure par l'intermédiaire d'une cloche cylindrique 5 présentant une paroi sensiblement frontale 6. L'impulseur 2 tourne par rapport au bâti 7 du convertisseur 1 avec interposition d'une bague d'étanchéité 8 et d'un joint d'étanchéité 9.

L'élément de sortie 10 du convertisseur 1 ou turbine est relié par l'intermédiaire d'un moyeu en forme de manchon 11a à un arbre de sortie 11 qui peut tourner par rapport à un arbre central de transmission creux 12. Le convertisseur 1 se complète par un réacteur ou stator 14 intercalé entre l'impulseur 2 et la trubine 10 et qui est monté sur un arbre fixe 15 par l'intermédiaire du dispositif de roue libre 16 qui permet donc, dans un sens de rotation, de rendre le réacteur 14 solidaire de l'arbre 15 fixé au carter 7.

Un piston de commande 17 en forme de flasque plan peut coulisser par rapport au manchon 11a par l'intermédiaire d'un joint d'étanchéité 17a logé dans une gorge annulaire pratiquée dans la manchon 11a. Le piston 17 comporte sur sa portion périphérique une garniture de friction 18 qui est susceptible d'entrer en contact avec la face frontale interne correspondante 6 de la cloche 5 de façon à rendre solidiare en rotation ladite cloche 5 et le piston de commande 17 à la manière d'un embrayage. Le débattement du piston 17 sur le moyeu 11a est limité du côté de la turbine 10 par une bague d'arrêt ou un élément équivalent solidaire du moyeu 11a et non représenté sur la figure, de façon à limiter l'éloignement des faces 6 et 18. Le piston de commande 17 est par ailleurs solidaire de la turbine 10 par l'intermédiaire d'un système amortisseur 20 comportant une pluralité de ressorts hélicoïdaux 21 et des rondelles de friction 21a de façon à assurer un amortissement des vibrations de torsion.

On notera que le piston de commande 17 et le système d'amortissement 20 se trouvent logés à l'intérieur même de l'enceinte 22 du convertisseur et baignent en permanence dans le fluide hydraulique. Le serrage ou le desserrage de l'embrayage constitué par la garniture 18 et le piston de commande 17 s'effectue donc par application du piston de commande contre la surface frontale 6 de la cloche 5 du convertisseur faisant partie intégrante de l'impulseur d'entrée 10.

Le piston de commande 17 comporte en outre dans son épaisseur au moins un orifice calibré 23 constituant une restriction faisant communiquer l'enceinte 22 du convertisseur avec une chambre de commande 24 dont le piston de commande 17 constitue une paroi mobile. Un ressort 25 constitué dans le mode de réalisation illustré par une rondelle Belleville, agit sur la face du piston de commande 17 délimitant la chambre de commande 24 de façon à repousser le piston de commande en direction de l'enceinte 22. La rondelle élastique 25 est maintenue en position par un épaulement 26 du manchon 11a. On notera par ailleurs que la face frontale 6 de la cloche 5 présente au voisinage du moyeu 27 du convertisseur un décrochement de profil sensiblement conique référencé 28 permettant d'obtenir dans cette zone un élargissement de la chambre de commande 24 facilitant le logement de la rondelle élastique 25.

L'enceinte 22 du convertisseur 1 communique avec l'alimentation en fluide hydraulique qui se fait par l'arbre central de transmission creux 12 par l'intermédiaire d'un passage 29 pratiqué dans le manchon 11a solidaire de la turbine 10 et du passage 30 pratiqué dans le moyeu 27 solidaire de l'impulseur 2. Le passage 30 communique quant à lui avec une chambre de distribution 31 pratiquée à l'extrémité du moyeu 27 et en communication avec l'arbre creux 12. L'étanchéité du passage 30 est assurée convenablement par deux joints annulaires 32 montés dans des gorges pratiquées dans le moyeu 27 et entourant le passage 30.

Un passage 33 pratiqué également dans le moyeu 27 relie la chambre de commande 24 comprise entre le piston de commande 17 et la face 6 de la coquille 5 avec l'espace annulaire 34 subsistant entre l'arbre de transmission 12 et l'arbre de sortie 11. L'espace est limité par une bague d'étanchéité 35.

Par ailleurs, la sortie du fluide hydraulique en provenance de l'enceinte 22 du convertisseur se fait par un passage 36 pratiqué dans l'arbre fixe 15 faisant communiquer l'enceinte 22 avec un espace annulaire 37 subsistant entre l'arbre fixe 15 et l'arbre de sortie 11. L'espace annulaire 37 est rendu convenablement étanche au moyen de bagues d'étanchéité 38 et 39.

L'espace annulaire 34 communiquant avec la chambre de commande 24 est relié à une canalisation 40 aboutissant à un orifice 41 d'une électrovanne 42 à trois voies et deux positions. L'espace annulaire 37 communiquant avec l'enceinte 22 du convertisseur est relié par une canalisation 43 comportant une restriction 44 à un deuxième orifice 45 de l'électrovanne 42. L'orifice de sortie de l'électrovanne 42 est relié par une canalisation 46 au réservoir de fluide hydraulique non représenté sur la figure et se trouvant à une pression nulle. Dans le mode de réalisation illustré, l'électrovanne 42 comprend deux électro-aimants 47 et 48 susceptibles de déplacer une bille d'obturation 49 dans deux positions obturant alternativement l'orifice 41 ou l'orifice 45.

Le fonctionnement du convertisseur et de sa commande de pontage est le suivant. Lorsque l'électrovanne 42 se trouve commandée de façon que la bille 49 obture l'orifice 41 comme représenté sur la fig. 1, le circuit hydraulique de la chambre de commande 24 se trouve obturé. Le retour au réservoir de fluide hydraulique en provenance de l'enceinte 22 du convertisseur se fait par l'orifice de sortie 36, la canalisation 43 et l'orifice 45 qui est dégagé par la bille 49. La restriction 44 limite le débit du fluide sortant de l'enceinte 22. La pression qui s'établit dans l'enceinte 22 du convertisseur compte tenu de l'existence de la restriction 44 est la même que celle qui règne à ce moment dans la chambre de commande 24. La chambre de commande 24 est en communication avec l'enceinte 22 par l'intervalle existant entre la garniture 18 et la face frontale 6 ainsi que par l'orifice calibré pratiqué dans l'épaisseur du piston de commande 17. L'action de la rondelle élastique 25 est prépondérante et maintient le piston de commande 17 éloigné de la face frontale 6 de la coquille 5 de l'impulseur 2. Le convertisseur fonctionne donc en phase de conversion de couple.

Lorsque l'électrovanne 42 est au contraire commandée de façon que la bille 49 obture le passage 45 c'est-à-dire dans la position inverse de celle qui est représentée sur la fig. 1 le circuit du convertisseur se trouve obturé tandis que la chambre de commande 24 peut communiquer avec le réservoir de fluide hydraulique par l'intermédiaire de la canalisation 40 et de l'orifice 41 dégagé par la bille 49. La pression d'alimentation régnant dans l'enceinte 22 du convertisseur est suffisante pour vaincre l'effort du ressort de rappel 25 compte tenu de l'orifice calibré 23 jouant le rôle de restriction qui limite le débit en direction de la chambre 24. Le piston de commande 17 se déplace donc jusqu'à ce que la garniture 18 vienne en contact de friction avec la zone correspondante de la face frontale 6. Dans cette position, le couple moteur est transmis directement de l'impulseur 2 à la turbine 10 en passant par le dispositif amortisseur 24: le convertisseur est en position de pontage. On notera que la pression cinétique due à l'effet de la force centrifuge sur le fluide se trouvant à l'intérieur du convertisseur s'ajoute à l'effet de la pression statique régnant dans l'enceinte du convertisseur pour exercer un effet de serrage entre la garniture 18 et la paroi correspondante 6 de la cloche 5 assurant en même temps une étanchéité convenable de la chambre de commande 24. Dans cette configuration, le retour du fluide hydraulique au réservoir se fait à partir de l'enceinte 22 par l'orifice calibré 23 puis par la chambre de commande 24. L'orifice calibré 23 a également pour fonction de permettre le décollement du piston de commande 17 par l'action de la rondelle élastique 25 lors du dépontage en équilibrant les pressions de part et d'autre du piston de commande 17.

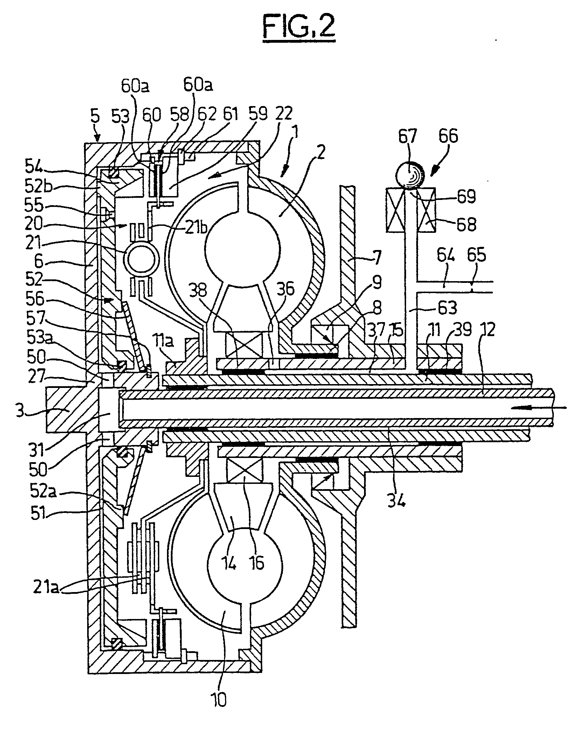

Le mode de réalisation illustré sur la fig. 2 où les pièces analogues portent les mêmes références, diffère uniquement du précédent mode de réalisation par la circulation du fluide hydraulique, la disposition du ressort de rappel du piston de commande et la structure de l'électrovanne de commande.

Tel qu'il est représenté sur la fig. 2, on voit en effet que la chambre de distribution 31 communique ici par les passages 50 directement avec la chambre de commande 51 dont le piston de commande 52 constitue une paroi mobile. Le piston de commande 52 affectant la forme d'un flasque plan annulaire est muni de joints d'étanchéité 53, 53a montés dans des gorges annulaires pratiquées respectivement dans l'alésage du piston de commande 52 et dans sa portion périphérique 54. Ces joints coopèrent lors du déplacement du piston de commande 52 respectivement avec la surface extérieure du moyeu 27 de l'impulseur 2 et avec la surface cylindrique interne de la cloche 5.

Au moins un orifice calibré 55 jouant le rôle de restriction est pratiqué dans l'épaisseur du piston de commande 52 et fait communiquer la chambre de commande 51 avec l'enceinte 22 du convertisseur. Un ressort constitué dans l'exemple illustré par une rondelle Belleville 56 est monté dans l'enceinte 22 autour du moyeu 27 et bloqué par une rondelle 57 solidaire du moyeu 27. Le ressort 56 entre en contact avec le piston de commande 52 par l'intermédiaire d'un bourrelet annulaire 52a. Par ailleurs, le piston de commande 52 comporte sur sa face délimitant la chambre de commande 51 un certain nombre d'excroissances 52b qui jouent un rôle de butée entrant en contact avec la paroi frontale 6 lorsque le piston de commande 52 est repoussé vers cette paroi de façon à ne pas annuler complétement le volume de la chambre de commande 51.

L'extrémité périphérique 54 du piston de commande 52 coopère avec un embrayage 58 comportant un plateau d'appui 59 et plusieurs disques lisses 60 et un ou plusieurs disques garnis 60a. Les disques 60 comprennent des ténons périphériques qui coopèrent avec des encoches étanches 61 pratiquées dans le diamètre intérieur de la cloche 5. Les disques garnis 60a coopèrent avec des encoches pratiquées dans la cloche 21b du système amortisseur 20. Le débattement du plateau d'appui 60 est limité axialement par un anneau d'arrêt 62. L'un des disques 60 est solidaire du dispositif d'amortissement 20 analogue à celui du mode de réalisation illustré sur la fig. 1.

L'espace annulaire 37 communiquant par l'orifice de sortie 36 avec l'enceinte 22 du convertisseur est relié à une canalisation 63 comportant un branchement secondaire de sortie 64 muni d'une restriction 65 et relié au réservoir de fluide hydraulique non représenté sur la figure. La canalisation 63 est en outre reliée à une électrovanne 66 se présentant dans le mode de réalisation illustré sous la forme d'un simple clapet d'obturation muni d'une bille 67 et d'un électro-aimant 68. La bille 67 est susceptible d'obturer la sortie 69 reliée au réservoir de fluide hydraulique. La fermeture de l'orifice 69 par la bille 67 agit donc sur le débit de fluide hydraulique à la sortie du convertisseur.

Le fontionnement de ce mode de réalisation est le suivant. L'alimentation du convertisseur en fluide hydraulique se fait à pression constanté par l'arbre d'entraînement creux 12 et la chambre de distribution 31. Lorsque l'électrovanne de commande de pontage 66 est dans l'état représenté sur la fig. 2, la bille 67 obturant l'orifice 69 de sortie du canal 63, le retour du fluide hydraulique au réservoir de fluide ne peut se faire que par le branchement de sortie 64 et la restriction 65 limitant ainsi le débit en sortie du convertisseur. Une pression $P_1$ inférieure à la pression d'alimentation P s'établit dans l'enceinte 22 du convertisseur qui se trouve située dans le circuit hydraulique entre l'orifice calibré d'entrée 55 et la restriction de sortie 65. La pression $P_1$ agissant sur la section du piston de commande 52 du côté de l'enceinte 22 ainsi que l'action du ressort 56 qui est dirigée dans le même sens, déterminent un effort $F_1$ inférieur à l'effort F résultant de la pression d'alimentation P sur la section du piston de commande 52 du côté de la chambre d'alimentation 51. Le piston de commande 52 vient donc en appui sur la paroi frontale 6 comme représenté sur la figure. L'embrayage 58 n'est pas serré et l'ensemble fonctionne en convertisseur de couple.

Lorsque l'électrovanne 66 est commandée de façon que la bille 67 ouvre le passage de sortie 69, le débit à la sortie du convertisseur augmente. La pression régnant dans l'enceinte 22 chute et devient la pression $P_2$ qui est inférieure à la pression $P_1$ précédente. La pression d'alimentation P agissant sur la section du piston de commande 52 du côté de la chambre de commande 51 est alors suffisante malgré l'existence de la pression intérieure $P_2$ sur la section du piston de commande 52 du côté de l'enceinte 22 et malgré l'action du ressort 56, pour provoquer un déplacement du piston de commande 52 vers l'enceinte 22 serrant ainsi l'embrayage 58. Le couple est alors transmis directement de l'impulseur 2 à la turbine 10 en passant par le dispositif amortisseur 20: le convertisseur est en position de pontage, tout glissement étant supprimé entre la turbine et l'impulseur.

Il est possible de concevoir l'électrovanne 66 de façon qu'elle soit ouverte lorsqu'un signal électrique lui est appliqué, ce qui entraîne le fonctionnement qui vient d'être décrit. Il est également possible de concevoir une électrovanne de commande ayant un fonctionnement inverse. Dans ce cas, l'électrovanne de commande est fermée en l'absence de tout signal électrique, l'orifice de sortie 69 étant alors obturé par la bille 67. Une telle structure présente l'avantage de permettre le fonctionnement de l'ensemble en convertisseur de couple en cas de panne de l'électrovanne ou du circuit électrique de commande.

Dans tous les cas, on obtient une commande de pontage efficace qui autorise en outre une structure compacte du convertisseur.

L'invention est de préférence appliquée à une transmission automatique de véhicule automobile à plusieurs rapports de transmission à passage sous couple. Dans ce cas, on associe le convertisseur de couple à un dispositif électronique de commande recevant des signaux correspondant respectivement à la vitesse de rotation de l'arbre d'entrée 12 et de l'arbre de sortie 11 de façon à commander le pontage en envoyant des signaux électriques appropriés à la vanne de commande de pontage 42 ou 66 dès que le rapport de ces vitesses atteint une valeur prédéterminée. On prévoit de préférence un circuit de temporisation recevant en outre les signaux correspondant aux passage des rapports de vitesse, de façon à interrompre le pontage à chaque passage de vitesse en envoyant à l'électrovanne de commande un signal électrique approprié pendent la durée du passage de vitesse.

**Revendications**

1. Convertisseur de couple hydrodynamique muni de moyens de pontage permettant le couplage sans glissement entre l'arbre d'entrée (3) et l'arbre de sortie (11) du convertisseur, comprenant un embrayage (11, 18; 58) muni d'un piston de commande (17, 52) soumis à l'action de la pression régnant dans l'enceinte (22) du convertisseur et présentant un orifice de passage calibré (23, 55) jouant le rôle d'une restriction faisant communiquer l'enceinte (22) avec une chambre de commande (24, 51) dont le piston de commande (17, 52) constitue une paroi mobile, une vanne de commande (42, 66) étant montée dans le circuit hydraulique d'alimentation du convertisseur, caractérisé par le fait que la vanne (42, 66) est disposée entre l'enceinte du convertisseur et le retour au réservoir de fluide et qu'une restriction (44, 65) est disposée dans le circuit de retour au réservoir de façon à provoquer une variation de la pression agissant sur l'une des faces du piston de commande (17, 52), l'autre face restant soumise sensiblement à la pression constante du fluide d'alimentation.

2. Convertisseur de couple hydrodynamique selon la revendcation 1, caractérisé par le fait que le fluide hydraulique à pression constante alimente directement l'enceinte du convertisseur, la vanne de commande (42) comportant trois voies et deux positions et étant montée de façon à fermer dans une première position le circuit de l'enceinte (22) du convertisseur et à fermer dans une deuxième position le circuit de la chambre de commande (24).

3. Convertisseur de couple hydrodynamique selon la revendication 2, caractérisé par le fait que la restriction (44) est disposée entre l'enceinte (22) du convertisseur et la vanne de commande (42) afin que dans la deuxième position de la vanne de commande, la pression régnant dans l'enceinte (22) du convertisseur et dans la chambre de commande (24) soient sensiblement égales à la pression d'alimentation.

4. Convertisseur de couple hydrodynamique selon les revendications 2 ou 3, caractérisé par le fait qu'un ressort de rappel (25) est disposé dans la chambre de commande (24) et exerce sur le piston de commande une poussée en direction de l'enceinte (22) du convertisseur.

5. Convertisseur de couple hydrodynamique selon la revendication 1, caractérisé par le fait que le fluide hydraulique à pression constante alimente la chambre de commande (51), la vanne de commande étant constituée par un clapet d'obturation (66), la restriction (65) étant disposée dans un branchement secondaire de retour au réservoir de fluide de façon à définir une pression intermédiaire pour le fluide régnant dans l'enceinte, le niveau de cette pression intermédiaire étant déterminé par la position du clapet (66).

6. Convertisseur de couple hydrodymamique selon la revendication 5, caractérisé par le fait qu'un ressort de rappel (56) est disposé dans l'enceinte du convertisseur et exerce une poussée sur le piston de commande (52) en direction de la chambre de commande (51).

7. Convertisseur de couple hydrodynamique selon l'une quelconque des revendications précédentes, caractérisé par le fait que le piston de commande est disposé dans l'enceinte du convertisseur et comporte une portion de serrage coopérant avec l'embrayage.

8. Convertisseur de couple hydrodynamique selon la revendication 7, caractérisé par le fait que la portion de serrage est disposée sur la face du piston de commande (17) délimitant la chambre de commande (24) et qu'elle comporte une garniture de friction (18) jouant également le rôle de joint d'étanchéité pour la chambre de commande.

9. Convertisseur de couple hydrodynamique selon la revendication 7, caractérisé par le fait que la portion de serrage est disposée sur la face du piston de commande (52) délimitant l'enceinte du convertisseur.

10. Convertisseur de couple hydrodynamique selon l'une quelconque des revendications précédentes, caractérisé par le fait qu'un dispositif amortisseur des vibrations de torsion (20) est disposé entre l'embrayage et l'arbre de sortie.

11. Convertisseur de couple hydrodynamique selon l'une quelconque des revendications précédentes, caractérisé par le fait que l'alimentation en fluide hydraulique à pression constante se fait par un arbre de transmission central (12) et par l'intermédiaire d'une chambre de distribution (31) logée à l'extrémité du moyeu (27) du convertisseur.

12. Application d'un convertisseur de couple hydrodynamique selon l'une quelconque des revendications précédentes, à une transmission automatique de véhicule automobile à plusieurs rapports de transmission à passage sous couple, caractérisée par le fait que l'on associe le convertisseur de couple à un dispositif électronique de commande recevant des signaux correspondant respectivement à la vitesse de rotation de l'arbre d'entrée et de l'arbre de sortie du convertisseur, de façon à commander le pontage dès que le rapport de ces vitesses atteint une valeur prédéterminée, un circuit électronique de temporisation recevant en outre des signaux correspondant au passage des rapports de vitesse, de façon, à interrompre le pontage à chaque passage de vitesse.

**Patentansprüche**

1. Hydrodynamischer Drehmomentwandler mit Überbrückungsvorrichtung, der eine schlupffreie Koppelung zwischen der Eingangswelle (3) und der Abtriebswelle (11) des Wandlers ermöglicht, enthaltend eine mit einem Steuerkolben (17, 52) versehene Kupplung (17, 18; 58) der der Einwirkung des im Gehäuse (22) des Wandlers herrschenden Drucks unterliegt und eine kalibrierte Durchlaßöffnung (23, 55) aufweist, die die Rolle einer Drosselung spielt und die Verbindung zwischen dem Gehäuse (22) und einer Steuerkammer (24, 51) herstellt, deren Steuerkolben (17, 52) eine bewegliche Wand darstellt, wobei ein Steuerventil (42, 66) im hydraulischen Speisekreis des Wandlers montiert ist, dadurch gekennzeichnet, daß das Ventil (42, 66) zwischen dem Gehäuse des Wandlers und dem Rücklauf zum Flüssigkeitsbehälter angeordnet ist, und daß eine Drosselung (44, 65) in der Rückleitung zum Behälter angeordnet ist, um eine Veränderung des Drucks hervorzurufen, der auf die eine Fläche des Steuerkolbens (17, 52) einwirkt, während die andere Fläche im wesentlichen unter dem konstanten Druck der Speiseflüssigkeit steht.

2. Hydrodynamischer Drehmomentwandler gemäß Anspruch 1, dadurch gekennzeichnet, daß die hydraulische Flüssigkeit unter konstantem Druck direkt dem Gehäuse des Wandlers zugeführt wird, wobei das Steuerventil (42) drei Wege und zwei Stellungen hat und so angeordnet ist, daß es in einer ersten Stellung die Leitung des Wandlergehäuses (22) und in einer zweiten Stellung die Leitung der Steuerkammer (24) schließt.

3. Hydrodynamischer Drehmomentwandler gemäß anspruch 2, dadurch gekennzeichnet, daß die Drosselung (44) zwischen dem Wandlergehäuse (22) und dem Steuerventil (42) angeordnet ist, so daß in der zweiten Stellung des Steuerventils (42) der im Wandlergehäuse (22) und in der Steuerkammer (24) herrschende Druck im wesentlichen gleich dem Speisedruck sind.

4. Hydrodynamischer Drehmomentwandler gemäß den Ansprüchen 2 oder 3, dadurch gekennzeichnet, daß eine Rückholfeder (25) in der Steuerkammer (24) angeordnet ist und eine Druckkraft auf den Steuerkolben in Richtung des Wandlergehäuses (22) ausübt.

5. Hydrodymamischer Drehmomentwandler gemäß Anspruch 1, dadurch gekennzeichnet, daß die Hydraulikflüssigkeit unter konstantem Druck in dei Steuerkammer (51) eingespeist wird, wobei das Steuerventil aus einer Verschlußklappe (66) besteht, die Drosselung (65) in einem Sekundärzweig des Rücklaufs zum Flüssigkeitsbehälter angeordnet ist um einen im Gehäuse herrschenden Zwischendruck für die Flüssigkeit zu definieren, wobei die Höhe dieses Zwischendrucks durch die Stellung der Klappe (66) bestimmt wird.

6. Hydrodynamischer Drehmomentwandler gemäß Anspruch 5, dadurch gekennzeichnet, daß im Wandlergehäuse eine Rückholfeder (56) angeordnet ist und auf den Steuerkolben (52) eine Druckkraft in Richtung der Steuerkammer (51) ausübt.

7. Hydrodynamischer Drehmomentwandler gemäß einem beliebigen der vorstehenden Ansprüch, dadurch gekennzeichnet, daß der Steuerkolben im Wandlergehäuse angeordnet ist und ein Klemmteil umfaßt, das mit der Kupplung zusammenwirkt.

8. Hydrodynamischer Drehmomentwandler gemäß Anspruch 7, dadurch gekennzeichnet, daß das Klemmteil auf der die Steuerkammer (24) abgrenzenden Fläche des Steuerkolbens (17) angeordnet ist und einen Reibbelag enthält, der ebenfalls als Dichtung für die Steuerkammer wirkt.

9. Hydrodynamischer Drehmomentwandler gemäß Anspruch 7, dadurch gekennzeichnet, daß das Klemmteil auf der Fläche des Steuerkolbens (52) angeordnet ist, die das Gehäuse des Wandlers abgrenzt.

10. Hydrodynamischer Drehmomentwandler gemäß einem beliebigen der vorstehenden Ansprüche, dadurch gekennzeichnet, daß zwischen der Kupplung und der Abtriebswelle ein Dämpfungsglied für die Torsionsschwingungen (20) angeordnet ist.

11. Hydrodynamischer Drehmomentwandler gemäß einem beliebigen der vorstehenden Ansprüche, dadurch gekennzeichnet, daß die Einspeisung mit einer unter konstantem Druck stehenden Speiseflüssigkeit über eine zentrale Hauptwelle (12) und über eine Verteilerkammer (31) erfolgt, die am Ende der Nabe (27) des Wandlers angeordnet ist.

12. Anwendung eines hydrodynamischen Drehmomentwandlers gemäß einem beliebigen der vorstehenden Ansprüche in einem automatischen Getriebe eines Kraftfahrzeugs mit mehreren Übersetzungsverhältnissen bei Schalten unter Drehmoment, dadurch gekennzeichnet, daß man den Drehmomentwandler einer elektronischen Steuervorrichtung beiordnet, die der Drehzahl der Eingangswelle und der Drehzahl der Abtriebswelle des Wandlers entsprechende Signale aufnimmt um die Überbrückungsvorrichtung zu steuern sobald das Verhältnis dieser beiden Drehzahlen einen vorher bestimmten Wert erreicht, wobei ein elektronischer Verzögerungskreis ferner Signale entsprechend der Schaltung der Übersetzungsverhältnisse erhält, so daß bei jeder Schaltung die Überbrückung unterbricht.

**Claims**

1. A hydrodynamic torque converter with lock-up device providing for slipless coupling between the input shaft (3) and the output shaft (11) of the converter, comprising a clutch (17, 18, 58) fitted with a control piston (17, 52) acted on by the pressure obtaining in the converter enclosure (22) and having a sized through orifice (23, 55) acting as a restriction connecting the converter enclosure (22) with a control chamber (24, 51) having the control piston (17, 52) forming a movable wall thereof, with a control valve (42, 66) being installed in the hydraulic circuit feeding the converter, characterized in that the valve (42, 66) is placed between the converter enclosure and the fluid reservoir return and in that a restrictor (44, 65) is placed in the reservoir return circuit so as to produce a variation in the pressure acting on one of the faces of the control piston (17, 52) with the other face remaining approximately subjected to the constant pressure of the feed fluid.

2. The hydrodymamic torque converter according to claim 1, characterized in that the constant pressure hydraulic fluid feeds the converter enclosure directly, with the control valve (42) comprising three ways and two positions and being installed so as to close the converter enclosure (22) circuit in a first position and close the control chamber (24) circuit in a second position.

3. The hydrodynamic torque converter according to claim 2, characterized in that the restrictor (44) is placed between the converter enclosure (22) and the control valve (42) so that in the second position of the control valve the pressure obtaining in the converter enclosure (22) and in the control chamber (24) are roughly equal to the feed pressure.

4. The hydrodynamic torque converter according to claims 2 or 3, chasracterized in that a return spring (25) is located in the control chamber (24) and exerts a thrust on the control piston in the direction of the converter enclosure (22).

5. The hydrodynamic torque converter according to claim 1, characterized in that the constant pressure hydraulic fluid feeds the control chamber (51), with the control valve consisting of a check valve (66), the restrictor (65) being located in a secondary fluid reservoir return connection so as to set up an intermediate pressure obtaining for the fluid in the converter enclosure, the level of this intermediate pressure being determined by the position of the check valve (66).

6. The hydrodynamic torque converter according to claim 5, characterized in that a return spring (56) is placed inside the converter enclosure and exerts a thrust on the control piston (52) in the direction of the control chamber (51).

7. The hydrodynamic torque converter according to any one of the preceding claims, characterized in that the control piston is located inside the converter enclosure and comprises a clamping portion working in conjunction with the clutch.

8. The hydrodynamic torque converter according to claim 7, characterized in that the clamping portion is placed on the face of the control piston (17) bounding the control chamber (24) and in that it comprises a friction lining (18) which also acts as seal for the control chamber.

9. The hydrodynamic torque converter according to claim 7, characterized in that the clamping portion is positioned on the face of the control piston (52) bounding the converter enclosure.

10. The hydrodynamic torque converter according to any one of the preceding claims, characterized in that a torsion vibration damping device (20) is located between the clutch and the output shaft.

11. The hydrodynamic torque converter according to any one of the preceding claims, characterized in that the constant pressure hydraulic fluid is fed through a central transmission shaft (12) and via a distribution chamber (31) housed in the end of the converter hub (27).

12. Application of a hydrodynamic torque converter, according to any one of the preceding claims, to the automatic transmission of an automotive vehicle with several transmission ratios changed under torque, characterized in that the torque converter is combined with an electronic control device receiving signals corresponding respectively to the rotational speed of the input shaft and output shaft of the converter so as to apply lock-up as soon as the ratio of these speeds reaches a preset value, with an electronic time delay circuit also receiving signals corresponding to speed ratio changes so as to interrupt lock-up at each speed change.

# FIG.1

# FIG.2